Europäisches Patentamt

European Patent Office

Office européen des brevets

(19)

(11) Veröffentlichungsnummer: **0 261 329**
**B1**

(12)

# EUROPÄISCHE PATENTSCHRIFT

(45) Veröffentlichungstag der Patentschrift:
**07.11.90**

(51) Int. Cl.⁵: **B64C 1/14,** B64C 1/32

(21) Anmeldenummer: **87109930.5**

(22) Anmeldetag: **10.07.87**

(54) Notausgang an Fahrzeugen, insbesondere Luft- und Raumfahrzeugen.

(30) Priorität: **22.09.86 DE 3632122 U**

(43) Veröffentlichungstag der Anmeldung:
**30.03.88 Patentblatt 88/13**

(45) Bekanntmachung des Hinweises auf die Patenterteilung:
**07.11.90 Patentblatt 90/45**

(84) Benannte Vertragsstaaten:
**DE FR GB IT NL**

(56) Entgegenhaltungen:
**DE-C- 758 023**
**US-A- 2 522 849**

(73) Patentinhaber: **Deutsche Airbus GmbH,**
**Arabellastrasse. 30, D-8000 München 81(DE)**

(72) Erfinder: **Gronow, Werner, 4, rue Francois Villon,**
**F-31700 Blagnac(FR)**

ACTORUM AG

## Beschreibung

Die Erfindung betrifft einen Notausgang an Fahrzeugen, insbesondere Luft- und Raumfahrzeugen, bestehend aus einer Notdurchstiegsöffnung in der Fahrzeugwand und einer mit dieser verriegelbaren und gegen deren Innenseite formschlüssig anliegenden Türe, die zum vollständigen Öffnen durch die Notdurchstiegsöffnung nach außen zu verbringen ist.

Derartige Notausgänge sind vorallem von Flugzeugen der zivilen Luftfahrt bekannt, sie werden aber auch im zunehmenden Maße an Passagierwagen der Eisenbahn eingesetzt. Diese Notausgänge unterliegen insbesondere bei Flugzeugen sehr strengen Anforderungen, da sie einerseits gegen einen relativ hohen Innendruck im Flugzeugrumpf absolut dicht schließen müssen und daher entsprechend stabil und schwer ausgebildet sowie formschlüssig und teilweise kraftschlüssig mit der Fahrzeug- bzw. Flugzeugwand fest verbunden sind. Andererseits muß in Notfällen jedoch die Möglichkeit gegeben sein, daß diese Notausgänge sehr schnell und ohne Kraftaufwand geöffnet werden können. Das bedeutet, daß jeder der dem Notausgang am nächsten sitzende Passagier - selbst wenn es sich um körperlich schwache Personen handelt - in der Lage sein muß, ohne den Einsatz von großen Kräften und Manipulationen für sich und die restlichen Passagiere einen freien Ausstieg nach außen zu schaffen, obwohl die Notausstiegstüren ähnlichen Dichtigkeits- und Festigkeitsanforderungen wie die normalen Zugangstüren und Fenster an Flugzeugen unterliegen.

Aus der DE-PS 758 023 geht beispielsweise eine Durchsichtscheibenhalterung an Fahrzeugen, insbesondere Luftfahrzeugen hervor, bei der im Gefahrenfall die Scheibe durch Herausreißen einer elastischen Zwischenlage, für die Schaffung einer Durchstiegsmöglichkeit für die Passagiere, losgelöst wird.

Bei dieser Anordnung wird den Passagieren zum Loslösen der Scheibe aus der Halterung oder der Halterung mitsamt der Scheibe vom Rahmen in der Flugzeugwand eine große Kraft abverlangt, die beispielsweise von Kindern oder älteren Passagieren nicht aufgebracht werden kann. Außerdem kann diese Kraft vom Passagier nur in stehender Position sowie parallel zu seiner Armlänge angewendet werden, mit dem Nachteil, daß zum vollen Gegenüberstehen zur Flugzeugwand, zwischen den Sitzreihen in Flugrichtung ein größerer und für die Flugzeuggesellschaften kostspieliger Abstand geschaffen werden muß. Außerdem ist bei dieser Ausführung nicht gewährleistet, daß die Scheibe, ohne den Durchstieg oder den Platz zwischen der Sitzreihe für die nachrückenden Passagiere zu versperren, auch mit großer Sicherheit nach außen fällt bzw. dies ohne zeitraubende Manipulationen bewerkstelligbar ist. Dies trifft insbesondere dann zu, wenn die Scheibe oder Türe aus Dichtigkeitsgründen allseitig größer als die Notdurchstiegsöffnung ausgebildet ist und an deren Innenseite unter der Druckbelastung der Rumpfinnenbelüftung anliegt.

Ferner ist aus der US-PS 2 522 849 ein fernbedienbares Notausstiegsystem für Flugzeuge bekannt geworden, bei dem die pneumatische Türentriegelung manuell ausgelöst und die Türe mittels Federdruck geöffnet wird.

Diese aufwendige Einrichtung ist entsprechend den geltenden hohen sicherheitstechnischen Maßstäben für moderne Verkehrssysteme nicht mehr geeignet, da einerseits die Einrichtung vor jedem Abflug neu geschärft werden muß und andererseits es außer dem Piloten auch jedem einzelnen Passagier möglich sein muß, den Notausstieg selbständig zu öffnen. Außerdem ist eine derartige Anordnung der Türe, die außen an der Passagierkabine mittels federbelasteter Scharniere schwenkbar angeordnet ist, aus aerodynamischen Gründen sowie aus Dichtigkeitsgründen bei modernen und druckbelüfteten Passagierkabinen nicht möglich.

Der Erfindung liegt die Aufgabe zugrunde, einen gattungsgemäßen Notausgang derart zu verbessern, daß unter Vermeidung der vorgenannten Nachteile stets ein sicherer und schnell benutzbarer Notausstieg bzw. ein rascher Notdurchstieg für die Passagiere bei einem minimalen Kraftaufwand und ohne manuelle Schwierigkeiten gewährleistbar ist.

Diese Aufgabe wird durch die im Anspruch 1 angegebenen Maßnahmen gelöst.

Weitere weiterbildende Merkmale werden in den Ansprüchen 2 bis 9 aufgezeigt.

Die Vorteile der Erfindung bestehen insbesondere darin, daß jeder Flugzeugpassagier ohne Kraftaufwand und in sitzender Position sowie ohne zusätzlichen Platzbedarf zwischen den Sitzen, den vollständigen Öffnungsvorgang für den Notausstieg bis zum Abschluß durchführen kann. Ferner erfolgt der Abstoß der Türe nach außen selbsttätig, so daß keine unter Zeitdruck durchzuführenden Manipulationen erforderlich sind, die den erfolgreichen Ausstieg der Passagiere in Frage stellen können. Indem die Türe stets nach außen fällt, wird verhindert, daß diese auf dem Boden oder Sitz liegend oder die Notdurchstiegsöffnung versperrend, den raschen Ausstieg der Passagiere in lebensgefährlicher Weise behindert und verzögert. Außerdem kann die Türe aus Gründen einer hohen Festigkeit und Dichtigkeit schwerer und dadurch stabiler bzw. allseitig wesentlich größer als die Notdurchstiegsöffnung ausgebildet werden.

Die Erfindung wird nachfolgend anhand eines Ausführungsbeispieles näher beschrieben und in der Zeichnung dargestellt. Es zeigen

Fig. 1 eine schematische Frontansicht des Notausganges von der Innenseite des Flugzeuges aus gesehen,

Fig. 2 eine perspektivische Ansicht des Notausganges von außen mit der Türe in Drehbewegung,

Fig. 3 eine schematische Frontansicht des Notausganges mit der Türe, nach Abschluß von deren Drehbewegung, in Ausstoßposition.

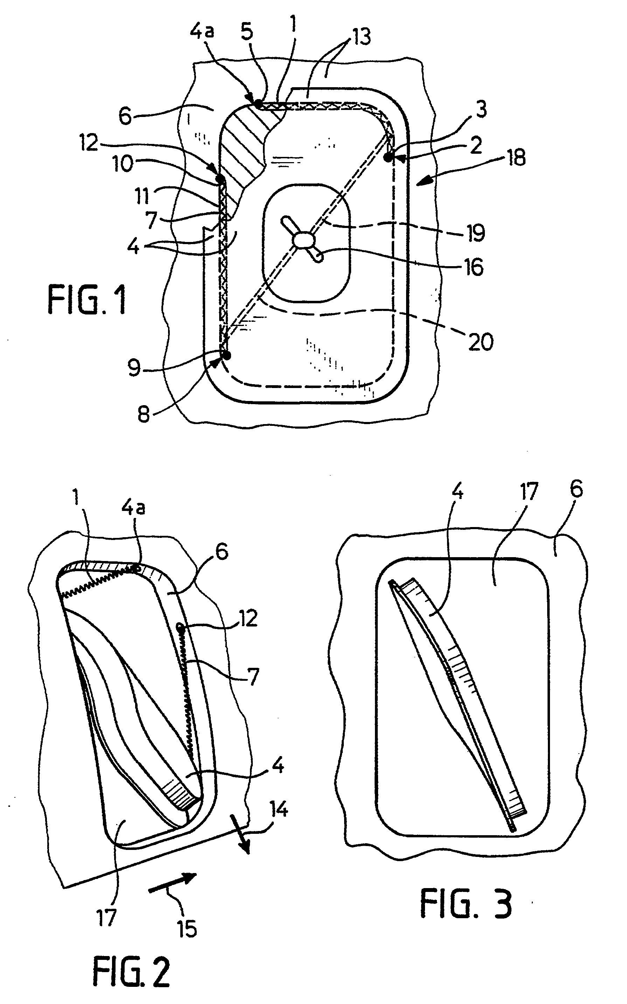

Aus der Fig. 1 ist der Notausgang 18 am Fahrzeug bzw. hier am Flugzeug dergestalt ersichtlich, wie er vom Innenraum des Flugzeuges aus vom Passagier gesehen wird. Dieser Notausgang 18, der im Flugzeug in nicht dargestellter Weise stets zwischen den Sitzreihen angeordnet ist, um den Passagieren den Zugang zu ermöglichen, verfügt über eine vollständig von der Fahrzeugwand 6 bzw. hier Flugzeugwand 6 lösbare Türe 4. Diese Türe 4 ist zur Vermeidung von z.B. Dichtigkeitsproblemen allseitig größer als die in der Flugzeugwand 6 vorgesehene Notdurchstiegsöffnung 17, d.h. größenmäßig diese an deren Innenseite überlappend ausgebildet, wie bei 4 in Fig. 1 angedeutet ist.

Da im Gefahrenfall – wie vorbeschrieben – die Türe 4 unbedingt nach außen 14 verbracht werden muß, sind an dieser erfindungsgemäß vorspannbare Dehnelemente 1, 7 angeordnet. Diese Dehnelemente 1, 7 sind derart am Notausgang 18 angeordnet, daß durch deren Kräfte die Türe 4 nach deren leichtgängigen Entriegelung durch den Passagier mittels einer bekannten Verriegelungseinrichtung 16, selbsttätig in eine Kipp- und Drehbewegung (insbesondere um die Hochachse) nach Fig. 2 versetzt wird.

Dadurch wird die Türe 4 in eine Ausstoßposition verbracht, dergestalt, daß sie nach der Fig. 3 in etwa diagonal in der Notdurchstiegsöffnung 17 und mit der Türebene im wesentlichen rechtwinklig zur Ebene der Notdurchstiegsöffnung 17 liegt und dabei von dieser vollständig berührungsfrei sein kann. Die Türe 4 kann damit entweder durch die aus der Drehbewegung entstandenen Beschleunigungskräften, oder durch ihr eigenes Gewicht oder unter der leichten Mithilfe der Passagiere nach außen 14, z.B. entgegen die Flugrichtung 15 gestoßen werden bzw. fallen, wobei der Fahrtwind hier zusätzlich unterstützend wirken kann falls das Flugzeug noch in Bewegung ist.

Zur Erzielung dieser Kipp- und Drehbewegung der Türe 4, ist an dieser ein vorspannbares Dehnelement 1 mit dem einen Ende 2 nahe an deren oberen Ecke 3 und dieses mit dem anderen Ende 5 an einem, der Ecke 3 etwa diagonal nach oben gegenüberliegenden Punkt 4a an der Flugzeugwand 6 angeordnet. Ein weiteres vorspannbares Dehnelement 7 ist mit dem einen Ende 8 nahe an einer, der oberen Ecke 3 etwa diagonal nach unten gegenüberliegenden Ecke 9 an der Türe 4 angebracht und mit dem anderen Ende 10 auf der ungefähren Höhe des oberen Viertels 12 der Türlänge an der Flugzeugwand 6 befestigt und zwar etwa parallel nach oben zur Längskante 11 der Türe 4 verlaufend.

Bei den Befestigungsmitteln für die Dehnelemente 1, 7 handelt es sich um bekannte und daher nicht der Erfindung zugehörige Befestigungselemente, die den Dehnelementen 1, 7 nach einer bestimmten Drehung deren Freigabe ermöglichen, wie es auch mit verschiedenen Hakenformen erreicht wird. Die Freigabe der Dehnelemente 1, 7 von der Befestigung sollte in vorteilhafter Weise flugzeugseitig erfolgen, um unter Vermeidung einer Passagierbehinderung die Dehnelemente 1, 7 beim Abstoß der Türe 4 mit dieser nach außen 14 gelangen zu lassen.

Die Dehnelemente 1, 7 können sowohl im entspannten wie auch im vorgespannten Zustand unter der Tür- und/oder Flugzeugwandverkleidung 13 aus Gründen der Sicherheit aus Gründen der Sicherheit und der Optik untergebracht werden, wobei die Dehnelemente 1, 7 im Aktivierungsfall, d.h. wenn sie Zugarbeit leisten, aus der Verkleidung herausgerissen oder auf sonstige Weise herausgetrennt werden.

Es ist auch denkbar, daß die Dehnelemente 1, 7 aus Sicherheitsgründen erst durch die Betätigung der Verriegelungsvorrichtung 16 zum Entriegeln der Türe 4, d.h. sehr kurz vor deren Abstoß, vorgespannt werden. Dies kann beispielsweise dadurch geschehen, daß die als Feder oder Gummiband ausgebildeten Dehnelemente 1, 7 durch eine Wegverkürzung oder -verlängerung mittels an der Verriegelungsvorrichtung 16 angeordneter und durch diese beweg- und arretierbarer Hebel 19, 20 vorgespannt werden. Die Wegverlängerung erfolgt z.B., indem sich durch eine Drehung der Verriegelungsvorrichtung 16 gegen den Uhrzeigersinn der Weg der mitdrehenden Hebeln 19, 20 gegenüber den Dehnelementen 1, 7 verlängert (Exzenterwirkung), wodurch diese durch eine direkte Einwirkung mit bekannten Mitteln gespannt werden. Auf die gleiche Weise könnten die Kolben mittels der Hebeln 19, 20 gespannt werden, falls die Dehnelemente 1, 7 zum Türausstoß, als bekannte und daher nicht dargestellte hydraulische oder pneumatische Einrichtungen ausgebildet sind. Die Arretierung der Hebeln 19, 20 in der Endstellung zur Aufrechterhaltung der Krafteinwirkung auf die Dehnelemente 1, 7, kann z.B. mittels federbelasteter Bolzen erfolgen, die in die Hebel 19, 20 einrasten.

Die Dehnelemente sind gemäß der Fig. 1 etwa längs der Kontur der Türe 4 angeordnet, sie können jedoch auch in einer nicht dargestellten Weise auf eine andere Art am Notausgang 18 angebracht werden, derart, daß die selbsttätige Verbringung der Türe 4 in eine Ausstoßposition in welcher die Tür in etwa diagonal in der Notdurchstiegsöffnung und mit der Türebene im wesentlichen rechtwinklig zur Ebene der Notdurchstiegsöffnung liegt, gewährleistet ist.

**Patentansprüche**

1. Notausgang an Fahrzeugen, insbesondere Luft- und Raumfahrzeugen, bestehend aus einer Notdurchstiegsöffnung in der Fahrzeugwand und einer mit dieser verriegelbaren und gegen deren Innenseite formschlüssig anliegenden Türe, die zum vollständigen Öffnen durch die Notdurchstiegsöffnung nach außen zu verbringen ist, dadurch gekennzeichnet, daß ein vorspannbares Dehnelement (1) mit dem einen Ende (2) nahe an einer oberen Ecke (3) der Türe (4) angeordnet ist und mit dem anderen Ende (5) an einem dieser Ecke (3) etwa diagonal nach oben gegenüberliegenden Punkt (4a) an der Fahrzeugwand (6) lösbar befestigt ist und daß ein weiteres vorspannbares Dehnelement (7) mit dem einen Ende (8) nahe an einer, der oberen Ecke (3) etwa diagonal gegenüberliegenden unteren Ecke (9) der Türe (4) angebracht ist und mit dem anderen Ende (10) etwa parallel zur Längskante (11) der Türe (4) nach oben verlaufend auf der ungefähren Höhe des oberen Viertels (12) der Türlänge, an der Fahrzeugwand (6) lösbar befestigt ist, wobei die Dehnelemente derart ausgebildet und angeordnet sind, daß sie nach Entriegelung der Türe diese durch Zugarbeit in eine Ausstoßposition verbringen, in welcher die Türe (4) in etwa diagonal in der Notdurchstiegsöffnung (17) und mit der Türebene im wesentlichen rechtwinklig zur Ebene der Notdurchstiegsöffnung (17) liegt.

2. Notausgang an Fahrzeugen nach Anspruch 1, dadurch **gekennzeichnet,** daß die vorspannbaren Dehnelemente (1, 7) Federn sind.

3. Notausgang an Fahrzeugen nach Anspruch 1, dadurch **gekennzeichnet,** daß die vorspannbaren Dehnelemente (1, 7) aus einem elastomeren Werkstoff - wie Gummi - bestehen.

4. Notausgang an Fahrzeugen nach Anspruch 1, dadurch **gekennzeichnet,** daß die vorspannbaren Dehnelemente (1, 7) aus hydraulisch oder pneumatisch vorspannbaren Kolben in Zylindern bestehen.

5. Notausgang an Fahrzeugen nach den Ansprüchen 1 bis 4, dadurch **gekennzeichnet,** daß die Dehnelemente (1, 7) im nicht aktivierten Zustand in der Türe (4) angeordnet sind.

6. Notausgang an Fahrzeugen nach den Ansprüchen 1 bis 4, dadurch **gekennzeichnet,** daß die Dehnelemente (1, 7) im nicht aktivierten Zustand in der Fahrzeugwand (6) angeordnet sind.

7. Notausgang an Fahrzeugen nach den Ansprüchen 1 bis 4, dadurch **gekennzeichnet,** daß die Dehnelemente (1, 7) im nicht aktiverten Zustand teils in der Türe (4) und teils in der Fahrzeugwand (6) untergebracht sind.

8. Notausgang an Fahrzeugen nach einem oder mehreren der vorhergehenden Ansprüche, dadurch **gekennzeichnet,** daß die Dehnelemente (1, 7) in der Türe (4) oder in der Fahrzeugwand (6) hinter einer durch deren Aktivierung aufreißbaren Verkleidung (13) verdeckt angeordnet sind.

9. Notausgang an Fahrzeugen nach einem oder mehreren der vorhergehenden Ansprüche, dadurch **gekennzeichnet,** daß die Dehnelemente (1, 7) mittels der Türentriegelungsbewegung der Verriegelungsvorrichtung (26) über an dieser angeordnete und durch diese arretierbare Hebeln (19, 20) kurz vor dem Abstoß der Türe (4) spannbar sind.

**Revendications**

1. Sortie de secours pour véhicules notamment aéronefs et engins spatiaux, composée d'un passage de sortie de secours réalisé dans la paroi du véhicule et d'une porte verrouillable dans la paroi et s'appliquant par une liaison par la forme contre la face intérieure de la paroi, cette porte étant mise à l'extérieur à travers le passage de secours pour assurer l'ouverture complète, sortie de secours caractérisée par un élément extensible (1) susceptible d'être précontraint, dont une extrémité (2) est reliée à un coin supérieur (3) de la porte (4) et dont l'autre extrémité (5) est fixée de manière détachable en un point (4a) de la paroi (6) du véhicule, point (4a) diamétralement opposé au coin (3), et en ce qu'un autre élément extensible (7), susceptible d'être précontraint, est fixé par une extrémité (8) au coin inférieur (9) qui est sensiblement opposé dans la direction diagonale au coin supérieur (3) sur la porte (4) et l'autre extrémité (10) est fixée de manière amovible à la paroi (6) du véhicule, sensiblement de manière parallèle à l'arête longitudinale (11) de la porte (4), à la hauteur du quart supérieur (12) de la hauteur de la porte, les éléments extensibles étant conçus et disposés de façon qu'après déverrouillage de la porte, ces éléments mettent la porte dans une position d'expulsion dans laquelle la porte (4) est dans une position sensiblement rectangulaire par rapport au passage de sortie (17) et le plan de la porte est perpendiculaire au plan du passage de sortie de secours (17).

2. Sortie de secours pour véhicules selon la revendication 1, caractérisée en ce que les éléments extensibles (1, 7) susceptibles d'être précontraints sont des ressorts.

3. Sortie de secours pour véhicules selon la revendication 1, caractérisée en ce que les éléments extensibles (1, 7) susceptibles d'être précontraints sont réalisés en un élastomère comme le caoutchouc.

4. Sortie de secours pour véhicules selon la revendication 1, caractérisée en ce que les éléments extensibles (1, 7) susceptibles d'être précontraints sont des pistons à précontrainte hydraulique ou pneumatique dans des cylindres.

5. Sortie de secours pour véhicules selon les revendications 1 à 4, caractérisée en ce que les éléments extensibles (1, 7) sont logés à l'état non activé dans la porte (4).

6. Sortie de secours pour véhicules selon les revendications 1 à 4, caractérisée en ce que les éléments extensibles (1, 7) sont montés, à l'état non activé, dans la paroi (6) du véhicule.

7. Sortie de secours pour véhicules selon les revendications 1 à 4, caractérisée en ce que les éléments extensibles (1, 7) sont logés, à l'état non activé en partie dans la porte (4) et en partie dans la paroi (6) du véhicule.

8. Sortie de secours pour véhicules selon l'une ou plusieurs des revendications précédentes, caractérisée en ce que les éléments extensibles (1, 7) sont logés dans la paroi (4) ou dans la paroi (6) du véhicule, de manière cachée, derrière un habillage (13) qui peut être arraché lors de l'activation des éléments extensibles.

9. Sortie de secours pour véhicules selon l'une ou plusieurs des revendications précédentes, caractérisée en ce que les éléments extensibles (1, 7) sont bandés par le mouvement de déverrouillage du dispositif de verrouillage (16) par des leviers (19, 20) prévus sur ce dispositif et bloqués par celui-ci, peu avant l'éjection de la porte (4).

**Claims**

1. An emergency exit on vehicles, particularly aircraft and spacecraft, consisting of an emergency way-through in the vehicle wall and of a door which can be locked to this and bears positively against the inside thereof and which is adapted to be brought to the outside through the emergency way-through for complete opening, characterised in that a tensile element (1) which can be pretensioned is disposed with the one end (2) close to an upper corner (3) of the door (4) and is detachably secured to the vehicle wall (6) by the other end (5) at a point (4a) higher up situated substantially diagonally opposite this corner (3), and that a further tensile element (7) which can be be pretensioned is fitted with the one end (2) close to a lower corner (9) of the door (4) situated substantially diagonally opposite the upper corner (3) and is detachably secured to the vehicle wall (6) by the other end (10), extending upwards substantially parallel to the longitudinal edge (11) of the door (4) approximately to the height of the upper quarter (12) of the length of the door, the tensile elements being constructed and arranged in such a manner that, after the door has been unlocked, the bring it, by tensile action, into an ejection position in which the door (4) lies substantially diagonally in the emergency way-through (17) aid with the plane of the door substantially at right-angles to the plane of the emergency way-through (17).

2. An emergency exit on vehicles according to Claim 1, characterised in that the tensile elements (1, 7) which can be pretensioned are springs.

3. An emergency exit on vehicles according to Claim 1, characterised in that the tensile elements (1, 7) which can be pretensioned consist of an elastomer material – such as rubber.

4. An emergency exit on vehicles according to Claim 1, characterised in that the tensile elements (1, 7) which can be prestressed consist of pistons which can be hydraulically or pneumatically pretensioned in cylinders.

5. An emergency exit on vehicles according to Claims 1 to 4, characterised in that, in the non-activated state, the tensile elements (1, 7) are disposed in the door (4).

6. An emergency exit on vehicles according to Claims 1 to 4, characterised in that, in the non-activated state, the tensile elements (1, 7) are disposed in the vehicle wall (6).

7. An emergency exit on vehicles according to Claims 1 to 4, characterised in that, in the nonactivated state, the tensile elements (1, 7) are accommodate partly in the door (4) and partly in the vehicle wall (6).

8. An emergency exit on vehicles according to any one or more of the preceding Claims, characterised in that the tensile elements (1, 7) are disposed in the door (4) or in the vehicle wall (6) concealed behind a covering (13) which can be torn open by their activation.

9. An emergency exit on vehicles according to any one or more of the preceding Claims, characterised in that, shortly before the door (4) is pushed off, the tensile elements (1, 7) can be tensioned by means of the door unlocking movement of the locking device (16) through levers (19, 20) which are disposed on the latter and can be locked thereby.

FIG.1

FIG.2

FIG. 3